# FASCICULE DE BREVET EUROPEEN

(11) **EP 3 665 046 B1**
(45) Date de publication et mention de la délivrance du brevet: **29.12.2021**
(21) Numéro de dépôt: 18734575.6
(22) Date de dépôt: 04.07.2018
(51) Int. Cl.: B60S 1/56

(54) **SYSTÈME DE DÉTECTION OPTIQUE DE VÉHICULE**
OPTISCHES FAHRZEUGDETEKTIONSSYSTEM
VEHICLE OPTICAL DETECTION SYSTEM

(30) Priorité: 09.08.2017 FR 1757613
(43) Date de publication de la demande: 17.06.2020
(73) Titulaire: Valeo Systèmes d'Essuyage, 78322 Le Mesnil Saint Denis (FR)
(72) Inventeur: GIRAUD, Frédéric, 78322 Le Mesnil Saint Denis (FR); LE-LIGNE, Christophe, 78322 Le Mesnil Saint Denis (FR)
(74) Mandataire: Valeo Visibility
(86) Numéro de dépôt international: PCT/EP2018/068068
(87) Numéro de publication internationale: WO 2019/029915

(56) Documents cités:
- EP-A1- 2 949 520
- EP-A1- 3 168 094
- DE-A1-102016 006 039
- US-A1- 2015 298 657

## Description

L'invention se rapporte au domaine des systèmes de détection optique équipant les véhicules automobiles. Elle concerne plus particulièrement le domaine des systèmes de détection optique équipé d'un système de nettoyage d'une surface vitrée de tels véhicules.

On connait des systèmes de détection optique qui comportent un ou plusieurs capteurs respectivement associés à un dispositif de projection d'un produit nettoyant pour le nettoyage d'une surface vitrée, ces capteurs pouvant être disposés en face avant et/ou en face arrière et/ou sur un rétroviseur du véhicule.

Ces systèmes de détection optique peuvent être actionnés par une commande automatique déclenchée par un dispositif d'aide à la conduite et/ou à la manœuvre de ce véhicule. Une surface vitrée associée à un tel système de détection optique correspond, par exemple, à un verre de protection de son capteur.

Dans ces architectures de systèmes de détection optique, chaque capteur est relié électriquement à un bus de données électronique pour l'échange de données avec une unité électronique principale. Lorsque le capteur est une caméra vidéo, un tel échange de données peut être un signal vidéo. Le dispositif de projection du système de détection est lui relié à un deuxième bus de commande électronique pour permettre sa commande depuis cette unité électronique principale ou une autre unité électronique. Une telle architecture impose plusieurs bus électroniques pour relier électriquement les différents composants d'un système de détection optique.

Par ailleurs, on comprendra que pour permettre de relier électriquement un grand nombre de capteurs à l'unité électronique principale, il est alors nécessaire de prévoir un système de détection optique comportant un grand nombre de bus électroniques. Chacun de ces bus électroniques représente un coût pondérant fortement le coût global du système de détection optique.

De plus, pour alimenter en produit nettoyant les dispositifs de projection de ces systèmes de détection optique, une telle architecture peut comporter une pompe reliée à chacun de ces dispositifs de projection, via une électrovanne principale dérivant le produit nettoyant fourni par la pompe vers chacun des systèmes de détection optique du véhicule. Ainsi, dans cette architecture, les dispositifs de projection des systèmes de détection optique sont alimentés par la pompe distinctement les uns des autres.

Lorsqu'un système de détection optique du véhicule comporte un grand nombre de dispositifs de projection alimentés par une même pompe, il est nécessaire de prévoir un conduit reliant hydrauliquement le dispositif de projection correspondant directement à la pompe ou via l'électrovanne principale. Le système de de détection optique comprend alors une pluralité de dispositifs de projection reliés directement à la pompe ou via l'électrovanne principale par une pluralité de conduits. Chacun de ces conduits représente un coût déterminant également fortement le coût global du système de détection optique.

En outre, ces architectures de systèmes de détection optique pour véhicule imposent de prévoir des circuits hydrauliques et électriques complexes dans le véhicule permettant de guider le conduit associé depuis la pompe vers le dispositif de projection correspondant et de guider les commandes électriques associées depuis l'unité électronique principale vers le capteur et/ou le dispositif de projection.

Le document DE 10 2016 006039 A1 divulgue un système de détection optique selon le préambule de la revendication 1.

La présente invention a pour but de pallier à au moins l'un des inconvénients précités et de proposer un système de détection optique équipant un véhicule et permettant de réduire son coût global tout en simplifiant son montage dans le véhicule.

A cet effet, l'invention a pour objet un système de détection optique pour véhicule comprenant au moins un capteur et un dispositif de projection d'un produit nettoyant sur la surface vitrée de ce capteur, le capteur étant relié électriquement à un réseau de commande et d'alimentation. Selon l'invention, le capteur et le dispositif de projection sont reliés électriquement l'un à l'autre en vue d'assurer une commande du dispositif de projection, le réseau étant dirigé vers le capteur et les informations ou l'alimentation récupérées par le capteur sont transmises vers le dispositif de projection par un câblage réduit à la seule distance entre le dispositif de projection de produit nettoyant et le capteur.

On comprendra par :
- « produit nettoyant », un produit liquide ou gazeux pouvant être projeté sur une surface vitrée en vue du nettoyage de celle-ci, un tel produit pouvant être indifféremment dans la présente invention de l'eau, du liquide de nettoyage lave-glace, ou encore de l'air,
- « surface vitrée », une surface transparente pouvant être une surface optique d'un système de détection optique équipant le véhicule ; notamment, on peut prévoir que la surface vitrée soit réalisée en verre ou bien en un plastique transparent de type Plexiglas,
- « capteur », un dispositif d'acquisition pouvant être une caméra vidéo ou encore un scanner laser nécessaire pour permettre le fonctionnement d'un dispositif d'aide à la conduite et/ou à la manœuvre du véhicule, la surface vitrée associé à ce capteur devant être sans salissure pour obtenir la meilleure image possible,
- « réseau de commande et d'alimentation », un réseau électrique configuré pour transporter une ou plusieurs instructions de commande, exploitables par le capteur et/ou par le dispositif de projection, et une alimentation électrique nécessaire au fonctionnement du capteur et du dispositif de projection ; ce réseau de commande et d'alimentation peut être réalisé d'un seul tenant, avec des câbles susceptibles de transporter le courant d'une part et l'instruction de commande d'autre part, ou bien être réalise en deux canaux électriques distincts, à savoir un réseau d'alimentation et un réseau de commande distinct, sans que cela sorte du contexte de l'invention.

Grâce au système de détection optique selon l'invention, il est possible de réduire sensiblement le coût global de l'implantation dans le véhicule d'un tel système de détection optique. En effet, contrairement à l'architecture de systèmes de détection optique connus, le capteur et le dispositif de projection de produit nettoyant associé ne sont pas raccordés indépendamment l'un de l'autre à un réseau de commande et d'alimentation, mais une partie de réseau est rendue commun à ces deux éléments. En d'autres termes, le réseau est dirigé vers le capteur et les informations ou l'alimentation récupérées par le capteur sont transmises vers le dispositif de projection par un câblage réduit à la seule distance entre le dispositif de projection de produit nettoyant et le capteur. On comprend que le système de détection optique selon l'invention est d'autant plus intéressant que le dispositif de projection est disposé au plus près du capteur.

De la sorte, il est notable selon l'invention que l'on simplifie grandement l'agencement des circuits électriques d'un système de détection optique équipant un véhicule ainsi que les opérations de montage. L'opérateur n'aura sur site qu'à connecter le capteur au réseau de commande et d'alimentation, le dispositif de projection étant connecté au préalable au capteur, étant entendu que selon l'invention, le dispositif de projection n'a pas à être connecté au réseau de commande et d'alimentation.

Par ailleurs, les câbles électriques sont régulièrement fixés sur des éléments de structure du véhicule par des attaches, que ce soit le long ou à travers de parois délimitant l'habitacle par exemple, et on comprend que le raccordement direct du dispositif de projection sur le capteur, notamment lorsque ces deux éléments sont agencés à proximité l'un de l'autre, permet de diminuer le nombre de ces attaches, et donc le coût des pièces à prévoir pour l'installation du système de détection optique dans le véhicule et le temps nécessaire pour le montage de ce système.

Selon une caractéristique de l'invention, le dispositif de projection comprend un gicleur et un dispositif d'actionnement de ce gicleur. Notamment, le dispositif d'actionnement peut être une électrovanne. On comprend que d'autres types de dispositif d'actionnement pourraient être mis en œuvre, dès lors qu'ils sont susceptibles d'influer sur le fonctionnement du gicleur via la réception d'une instruction de commande électronique appropriée.

Lorsqu'un ordre de commande automatique en nettoyage est reçu par un module électronique de commande via le réseau de commande et d'alimentation, le module électronique de commande transmet et/ou génère l'instruction de commande du dispositif d'actionnement pour autoriser le passage du produit nettoyant depuis un réseau de distribution hydraulique vers le gicleur, et le cas échéant pour autoriser le déplacement du gicleur, pour projeter le produit nettoyant sur la surface vitrée qui lui est associée.

Le gicleur peut être de type fixe ou bien télescopique. En d'autres termes, le dispositif de projection est configuré pour que la ou les buses de projection du produit nettoyant gardent une position fixe pendant et entre les opérations de nettoyage, ou bien que ces buses de projection soient montées sur un corps télescopique susceptible de prendre une position de nettoyage en regard de la surface vitrée à nettoyer et une position escamotée.

Selon différentes caractéristiques de l'invention, prises seules ou en combinaison, on pourra prévoir que :
- le dispositif d'actionnement et le capteur comportent des éléments de connexion électrique qui coopèrent pour transmettre une alimentation et/ou une instruction de commande depuis le réseau de commande et d'alimentation vers le dispositif d'actionnement, par l'intermédiaire du capteur ;
- le dispositif d'actionnement comporte un module électronique de pilotage configuré pour assurer sa commande ;
- le capteur comprend une borne de connexion électrique et le dispositif d'actionnement comprend un plot de connexion électrique, le plot de connexion électrique du dispositif d'actionnement étant relié électriquement au réseau de commande et d'alimentation via la borne de connexion électrique du capteur ;
- la borne de connexion électrique du capteur comprend deux broches reliées électriquement l'une à l'autre, une première broche étant destinée à être reliée électriquement au réseau de commande et d'alimentation et la deuxième broche étant destinée à être reliée au plot de connexion électrique du dispositif d'actionnement, par l'intermédiaire d'un câble de raccordement ; on comprend que le câble de raccordement est déjà connecté entre le capteur et le dispositif de projection associé au moment de l'assemblage sur le véhicule, ce qui facilite le montage des éléments sur le véhicule ; le câble de raccordement est configuré pour transmettre commande et alimentation conformément à ce qui a été reçu par le capteur directement du réseau de commande et d'alimentation ;
- le capteur comporte un module électronique de pilotage configuré pour générer le fonctionnement du dispositif d'actionnement ;
- le capteur comprend une première borne de connexion électrique et une deuxième borne de connexion électrique distinctes l'une de l'autre, et en ce que le dispositif d'actionnement comprend un plot de connexion électrique, la première borne de connexion électrique du capteur étant reliée au réseau de commande et d'alimentation et la deuxième borne de connexion électrique du capteur étant reliée au plot de connexion électrique du dispositif d'actionnement ;
- seule une première borne de connexion électrique comporte une broche dédiée à la transmission de données, cette broche étant reliée d'une part au module électronique de pilotage du capteur et d'autre part au réseau de commande et d'alimentation ; et chaque borne de connexion électrique comporte deux broches dédiées à l'alimentation parmi lesquelles une broche dédiée à une borne d'alimentation positive et une broche dédiée à la masse, ces bornes étant reliées électriquement deux à deux, les deux broches de la première borne de connexion électrique étant destinées à être reliées électriquement au réseau de commande et d'alimentation et les deux broches de la deuxième borne de connexion électrique étant destinées à être reliées électriquement à des deuxième et troisième broches du plot de connexion électrique du dispositif d'actionnement. Ainsi, on comprend que le module électronique de pilotage associé au capteur est configuré pour récupérer les informations de commande sur le réseau de commande et d'alimentation, puis pour traiter ces informations et en déduire un mode de fonctionnement du dispositif de nettoyage, et notamment pour déterminer le moment adéquat pour alimenter le dispositif de projection. Et que dans le même temps les bornes et plots de connexion sont configurés pour transmettre directement l'alimentation depuis le réseau de commande et d'alimentation vers le dispositif de projection.

Selon une caractéristique de l'invention, le module électronique de commande, qu'il soit embarqué sur le dispositif d'actionnement du dispositif de projection ou qu'il soit agencé sur le capteur, est configuré pour analyser l'ensemble des instructions de commande passant par le réseau de commande et d'alimentation et pour récupérer dans cet ensemble la ou les instructions de commande correspondant au dispositif de projection.

Selon une caractéristique de l'invention, un boîtier loge le capteur et le dispositif de projection.

Selon une caractéristique de l'invention, le système de détection optique comprend une pluralité de capteurs et de dispositifs de projection d'un produit nettoyant associés, les capteurs étant reliés électriquement à un bus de données, formant le réseau de commande et d'alimentation, indépendamment l'un de l'autre.

Selon une caractéristique de l'invention, le système de détection optique comprend un bus de distribution hydraulique apte à permettre la circulation du produit nettoyant, les dispositifs de projection étant reliés au bus de distribution hydraulique indépendamment les uns des autres. Par « bus de distribution hydraulique », on comprend un conduit permettant l'acheminement du produit nettoyant.

Dès lors, il est possible de réduire encore davantage le coût global de l'implantation dans le véhicule d'un tel système de détection optique. En effet, contrairement à l'architecture de systèmes de nettoyage connus, il n'est utilisé qu'un bus de distribution hydraulique pour alimenter hydrauliquement une pluralité de dispositifs de projection équipant le véhicule. Ces dispositifs de projection sont chacun reliés hydrauliquement à ce même bus de distribution hydraulique le long de celui-ci de sorte que chacun de ces dispositifs de projection peut être desservi en produit nettoyant par le bus de distribution hydraulique indépendamment l'un de l'autre.

Selon un mode de réalisation de l'invention, le bus de distribution hydraulique forme un circuit hydraulique ouvert. En d'autres termes, le produit nettoyant circulant dans le bus de distribution hydraulique est à une pression sensiblement différente entre une première extrémité du bus de distribution hydraulique reliée à une sortie de la pompe et une deuxième extrémité du bus de distribution hydraulique fermée et opposée à la première extrémité, ceci lorsque tous les dispositifs de projection reliés à ce bus de distribution hydraulique sont actionnés.

On pourra envisager que le bus de distribution hydraulique forme un circuit hydraulique fermé. En d'autres termes, le produit nettoyant circule dans une boucle fermée et présente de la sorte une pression quasi constante en entrée et en sortie du bus de distribution hydraulique, ceci lorsque tous les dispositifs de projection reliés à ce bus de distribution hydraulique sont actionnés.

Selon une caractéristique de l'invention, le système de détection optique comprend une pompe apte à alimenter le bus de distribution hydraulique en produit nettoyant. Notamment, la pompe peut alimenter le bus de distribution hydraulique en puisant du produit nettoyant dans un réservoir de stockage de ce produit. Lorsque le bus de distribution hydraulique forme un circuit hydraulique fermé, une première extrémité du bus de distribution hydraulique est reliée à une sortie de la pompe et une deuxième extrémité du bus de distribution hydraulique opposée à la première extrémité est reliée à une entrée de la pompe.

Selon une caractéristique de l'invention, le bus de distribution hydraulique comprend au moins deux portions agencées de part et d'autre d'une paroi et reliées l'une à l'autre par un connecteur hydraulique. Ce mode de réalisation permet de relier hydrauliquement deux portions du bus de distribution hydraulique s'étendant le long du véhicule et formant selon l'invention le conduit principal de distribution, ces deux portions étant séparées par une paroi du véhicule. Le connecteur hydraulique peut être monté dans une ouverture formée dans cette paroi. Une telle paroi peut être métallique ou plastique et correspond à une paroi sur le chemin de distribution du bus de distribution hydraulique parcourant le véhicule pour desservir les dispositifs de projection.

Une extrémité de chaque portion du bus de distribution hydraulique destinée à être raccordée l'une à l'autre peut porter un port de connexion hydraulique pour son raccordement au connecteur hydraulique.

Dans ce contexte de bus de distribution hydraulique, les au moins deux dispositifs de projection peuvent notamment être reliés à une même portion du bus de distribution hydraulique, ou être reliés respectivement à des portions différentes du bus de distribution hydraulique. Notamment, on pourra prévoir que les dispositifs de distribution sont agencés de sorte que chaque portion du bus de distribution hydraulique dessert au moins deux dispositifs de distribution.

Selon des caractéristiques de l'invention, au moins un des dispositifs de projection comprend des organes de raccordement hydraulique sur le bus de distribution hydraulique. En d'autres termes, chacun des dispositifs de projection est relié au bus de distribution hydraulique par un organe de raccordement hydraulique. Et, de façon complémentaire, au moins un des dispositifs de projection comprend des organes de maintien mécanique sur le bus de distribution hydraulique.

Ces organes de raccordement hydraulique peuvent être formés par des seringues prévues pour percer le bus de distribution hydraulique.

Selon une caractéristique de l'invention, l'organe de raccordement hydraulique et l'organe de maintien mécanique de chacun des dispositifs de projection peuvent être portés par le dispositif d'actionnement, qui peut être avantageusement relié mécaniquement et hydrauliquement au bus de distribution hydraulique dans une même opération d'assemblage.

De façon particulière, l'organe de raccordement hydraulique et l'organe de maintien mécanique de chacun des dispositifs de projection peuvent être portés par le boîtier. Le boîtier préalablement équipé du dispositif de projection et du capteur peut alors être relié mécaniquement et hydrauliquement au bus de distribution hydraulique. Le boîtier forme alors une interface de connexion mécanique et hydraulique entre le bus de distribution hydraulique et le dispositif de projection correspondant.

Selon une caractéristique de l'invention, le réseau de commande et d'alimentation et le bus de distribution hydraulique forment un même bus de distribution électrique et hydraulique des dispositifs de projection. Sur ce bus de distribution électrique et hydraulique viennent se connecter distinctement les uns des autres les systèmes de détection optique. En d'autres termes, le réseau de commande et d'alimentation est formé conjointement avec le bus de distribution hydraulique.

Grâce à ce mode de réalisation particulier, il est possible de simplifier l'assemblage du système de détection optique dans le véhicule. Ainsi, les systèmes de détection optique peuvent être reliés hydrauliquement et électriquement depuis une partie commune du bus de distribution.

Le bus de distribution électrique et hydraulique peut notamment être flexible. En d'autres termes, le bus de distribution électrique et hydraulique peut être réalisé dans une matière élastique.

Selon une caractéristique de l'invention, le bus de distribution électrique et hydraulique comporte un tube extrudé présentant au centre du tube un canal central à l'intérieur duquel est susceptible de circuler le produit nettoyant et présentant sur la périphérie du tube des conduites à l'intérieur desquelles sont susceptibles de circuler chacun des brins d'alimentation et de commande du réseau.

Selon une autre caractéristique de l'invention, le bus de distribution électrique et hydraulique comporte un tube à l'intérieur duquel est susceptible de circuler le produit nettoyant et l'intérieur duquel s'étend également le réseau de commande et d'alimentation, qui peut jouer le rôle d'un fil résistif pour élever la température du produit nettoyant à projeter, notamment dans des conditions de grand froid. A titre d'exemple, le réseau de commande et d'alimentation peut traverser le bus de distribution hydraulique en son centre. On comprendra alors que le bus de distribution hydraulique est annulaire pour recevoir en son centre le réseau de commande et d'alimentation. En d'autres termes, le bus de distribution hydraulique et le réseau de commande et d'alimentation sont coaxiaux l'un par rapport à l'autre.

Selon une caractéristique de l'invention, le bus de distribution électrique et hydraulique comprend au moins deux portions reliées l'une à l'autre par un connecteur hydraulique et électrique. Ce mode de réalisation particulier permet de relier électriquement et hydrauliquement deux portions du bus de distribution séparées par une paroi du véhicule, par exemple une paroi délimitant l'habitacle et le compartiment moteur. Le connecteur électrique et hydraulique peut être monté dans une ouverture formée dans cette paroi.

Avantageusement, une extrémité de chaque portion du bus de distribution électrique et hydraulique destinée à être raccordée l'une à l'autre porte un port de connexion électrique et hydraulique pour son raccordement au connecteur électrique et hydraulique.

Selon d'autres caractéristiques de l'invention, il peut être prévu qu'au moins un premier dispositif de projection soit destiné à nettoyer une surface optique d'un capteur servant à une analyse automatique de la scène de route, c'est-à-dire une analyse par l'électronique du véhicule pour notamment le pilotage d'un dispositif d'aide à la conduite et/ou à la manœuvre de ce véhicule, et qu'au moins un deuxième dispositif de projection soit destiné à nettoyer une surface vitrée de l'habitacle ou une surface optique d'un capteur servant uniquement à l'analyse directe par le conducteur du véhicule. Dans ce cas, il est avantageux que le bus de distribution hydraulique soit agencé de sorte que l'au moins un deuxième dispositif de projection soit disposé sur le bus de distribution hydraulique, commun à chacun des dispositifs de projection, pour être plus éloigné d'une sortie de la pompe alimentant ce bus de distribution hydraulique que ne l'est l'au moins un premier dispositif de projection.

En effet, notamment lorsque le bus de distribution hydraulique commun à tous les dispositifs de projection est un circuit ouvert, on comprend que le produit nettoyant circulant au niveau de l'extrémité de ce circuit ouvert la plus éloignée de la pompe peut présenter une pression moins grande que celle du produit nettoyant circulant en sortie de pompe. Or, il importe que les systèmes de détection optique associés à des systèmes d'aide à la conduite soient immaculés afin d'éviter une mauvaise analyse de la scène de route détectée par l'électronique embarquée du véhicule alors que si le conducteur analyse par lui-même l'image détectée de la scène de route, il est plus à même d'analyser l'image partiellement entachée sans faire de faute de jugement. Dès lors, on peut avantageusement placer le deuxième dispositif de projection sur une portion du bus de distribution hydraulique où la pression est moins grande, le risque potentiel d'un nettoyage non optimal étant moins impactant. Par ailleurs, en priorisant ainsi l'alimentation hydraulique en produit nettoyant pour des premier et deuxième dispositifs de projection, c'est-à-dire en les plaçant de sorte qu'ils soient atteints plus ou moins vite par le produit nettoyant en sortie de pompe, il est possible d'éviter qu'une action non essentielle de nettoyage pénalise le déclenchement ou l'efficacité d'une action essentielle pour le traitement automatique des informations en provenance des systèmes de détection optique.

D'autres caractéristiques, détails et avantages de l'invention ressortiront plus clairement à la lecture de la description donnée ci-après à titre indicatif en relation avec des dessins dans lesquels :

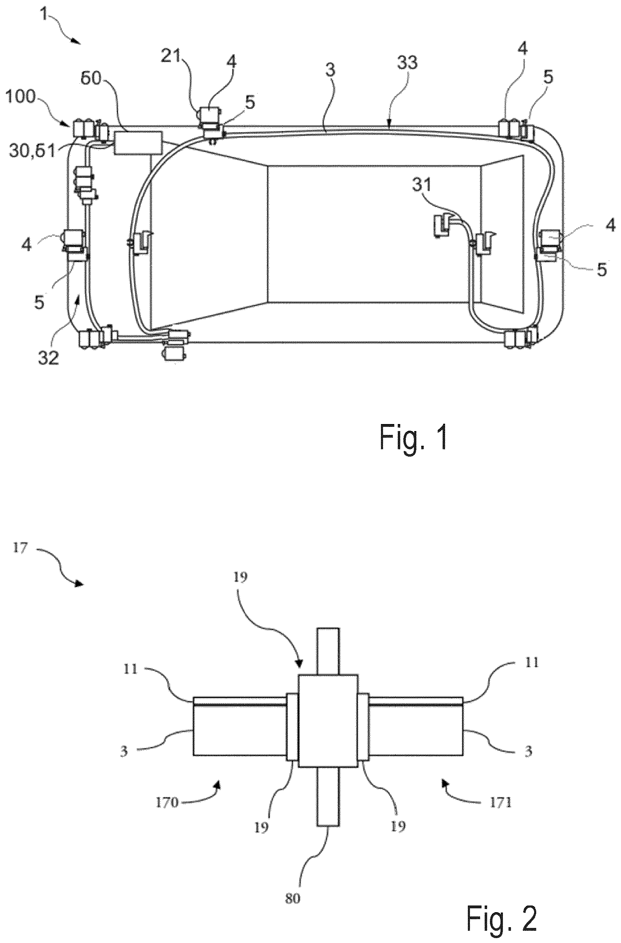

- la figure 1 illustre une vue schématique d'un véhicule automobile équipé d'un système de détection optique selon l'invention comprenant un réseau de commande et d'alimentation et un bus de distribution hydraulique accolés l'un à l'autre et parcourant le véhicule pour distribuer respectivement de l'alimentation et des instructions de commande, et un produit nettoyant, à des dispositifs de projection du système de détection optique montés sur ce même véhicule,
- la figure 2 illustre une vue schématique d'une paroi structurelle du véhicule logeant un connecteur hydraulique et électrique configuré pour relier deux portions du réseau de commande et d'alimentation et deux portions du bus de distribution hydraulique, tel que représenté sur la figure 1,

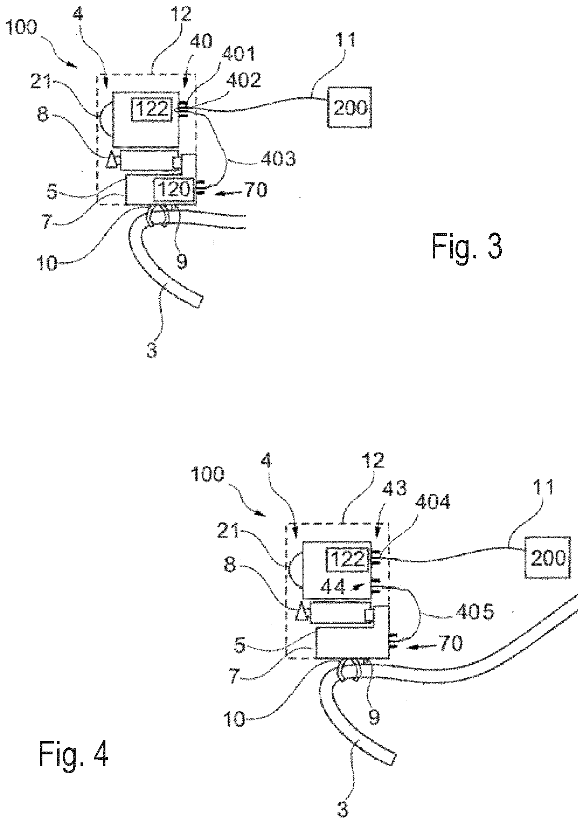

- la figure 3 illustre une vue schématique d'un premier mode de réalisation de l'invention dans lequel un système de détection optique est relié, d'une part, hydrauliquement au bus de distribution hydraulique et, d'autre part, électriquement à un réseau de commande et d'alimentation, le système de détection optique comportant un module de commande électronique embarqué sur le capteur et un module de commande électronique embarqué sur le dispositif de projection,
- la figure 4 illustre une vue schématique d'un deuxième mode de réalisation de l'invention dans lequel un système de détection optique est relié, d'une part, hydrauliquement au bus de distribution hydraulique et, d'autre part, électriquement à un réseau de commande et d'alimentation, le système de détection optique comportant un unique module de commande électronique embarqué sur le capteur,

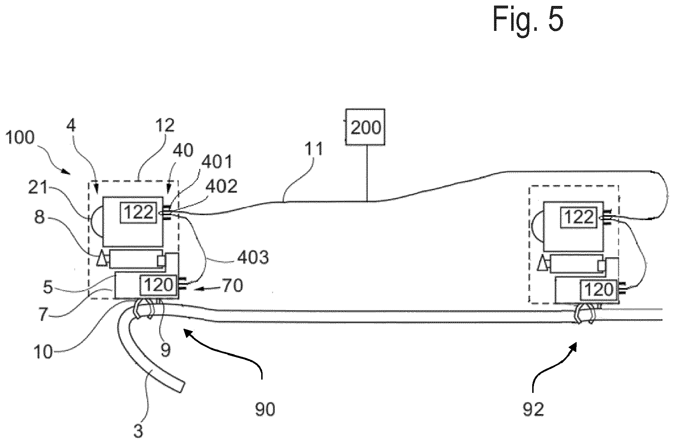

- et la figure 5 illustre une vue schématique de deux systèmes de détection optique reliés successivement d'une part à un bus de distribution hydraulique et d'autre part à un réseau de commande et d'alimentation en deux zones distinctes l'une de l'autre, les systèmes de détection optique étant ici conformes à celui du premier mode de réalisation illustré sur la figure 3.

A la figure 1, on a représenté un véhicule 1 automobile équipé d'un système de détection optique 100 selon l'invention, qui permet le nettoyage d'au moins une surface vitrée 21 du véhicule 1. Une telle surface vitrée peut être par exemple une surface optique 21 d'un capteur optique 4 équipant le véhicule 1.

Le système de détection optique 100 comprend ainsi un capteur optique 4 et un dispositif de projection 5 du produit nettoyant disposé dans le véhicule 1 pour être associé au nettoyage d'une surface vitrée 21 de ce capteur 4, et il comporte en outre un réseau de commande et d'alimentation 11 apte à permettre l'alimentation en courant et la transmission d'instruction de commande au système de détection optique et plus particulièrement au dispositif de projection de produit nettoyant. Dans l'exemple illustré, le véhicule est équipé d'une pluralité de dispositifs de projection agencés de manière à être spécifiquement dédié au nettoyage d'une unique surface vitrée, mais on comprendra que plusieurs dispositifs de projection pourraient être dédiés au nettoyage d'une même surface vitrée, sans sortir du contexte de l'invention, et que le véhicule pourrait être équipé d'un seul capteur et d'un dispositif de projection associé, étant entendu que ces variantes resteraient dans le cadre de l'invention dès lors que le ou les capteurs sont reliés à un réseau de commande et d'alimentation 11 et qu'un capteur est relié à un dispositif de nettoyage associé pour la transmission de données visant à commander le fonctionnement du dispositif de projection.

Plus particulièrement, selon l'invention, chacun des dispositifs de projection 5 est relié électriquement au réseau de commande et d'alimentation 11 par l'intermédiaire du capteur 4.

Sur la figure 5, on a illustré un système de détection optique 100 dans lequel deux ensembles, respectivement formés d'un capteur et d'un dispositif de projection ménagés dans un boîtier 12 tel que cela sera décrit ci-après, sont reliés à un même réseau de commande et d'alimentation 11 ainsi qu'à un bus de distribution hydraulique commun 3 de manière indépendante l'un de l'autre, et dans des zones distinctes et successives 90, 92 (visibles sur la figure 3) du bus de distribution hydraulique. Dans ce mode de réalisation non limitatif, on comprendra qu'un unique réseau de commande et d'alimentation assure l'alimentation et la commande de l'ensemble des capteurs et dispositifs de projection du système de détection 100 ménagé sur ce véhicule 1.

Le système de détection optique 100 comprend par ailleurs une pompe 60 et un réservoir de stockage de produit nettoyant. La pompe 60 est configurée pour récupérer le produit nettoyant dans le réservoir de stockage et pour alimenter le conduit principal hydraulique de manière continu en produit nettoyant. Plus particulièrement, une sortie 61 de la pompe 60 est reliée à une première extrémité 30 du bus de distribution hydraulique 3. Il en résulte que le bus de distribution hydraulique 3 s'étend le long du véhicule depuis cette première extrémité 30 jusqu'à une deuxième extrémité 31. Dans l'exemple illustré, la deuxième extrémité 31 du bus de distribution hydraulique 3, opposée à la première extrémité 30, est fermée de sorte que le bus de distribution hydraulique 3 forme un circuit hydraulique ouvert. Bien entendu, le bus de distribution hydraulique pourrait être configuré de manière à former un circuit hydraulique fermé et la deuxième extrémité 31 du bus de distribution hydraulique pourrait dans ce contexte être reliée au réservoir de stockage.

Selon l'invention, le réseau de commande et d'alimentation 11 est disposé dans le véhicule pour distribuer du courant et des instructions de commande à chaque ensemble formé d'un capteur et d'un dispositif de projection, et pour des raisons de simplification de montage et de diminution des coûts, le réseau de commande et d'alimentation 11 court avantageusement le long du bus de distribution hydraulique 3, tel que cela est notamment visible sur la figure 2.

Le bus de distribution hydraulique 3 et le réseau de commande et d'alimentation 11 présentent ici respectivement une première portion 32 agencée dans la partie avant du véhicule, et une deuxième portion 33 agencée dans l'habitacle, chaque portion serpentant dans la partie du véhicule correspondante pour distribuer l'ensemble des dispositifs de projection présents dans cette partie du véhicule. On comprend qu'une continuité hydraulique est ici réalisée entre ces deux portions 32, 33 puisqu'une unique pompe est prévue sur le bus de distribution hydraulique.

A la figure 2, on a représenté un moyen d'assurer la continuité entre ces portions 32, 33 lorsque les bus et réseau 3, 11 sont amenés à traverser une ou plusieurs paroi(s) 80 du véhicule 1, ceci avantageusement pour optimiser le parcours des bus et réseau dans le véhicule 1 et ainsi réduire la longueur nécessaire pour la réalisation de ces derniers. Dans ce cas, les portions 32, 33 sont reliées par paires l'une à l'autre via un connecteur hydraulique et électrique 19. Plus particulièrement, une première portion 32 et une deuxième portion 33 des bus et réseau 3, 11 portent chacune à leur extrémité en regard un port de connexion hydraulique et électrique pour leur raccordement au connecteur 19. Il peut être prévu que deux dispositifs de projection 5 soient reliés à une même portion 32, 33 des bus de distribution hydraulique 3 et du réseau de commande et d'alimentation 11 ou chacun à une portion 32, 33 différente de ces derniers.

Le réseau de commande et d'alimentation 11 et le bus de distribution hydraulique 3 peuvent être configuré pour former un même bus de distribution 17 électrique et hydraulique des dispositifs de projection 5, avec le réseau de commande et d'alimentation qui peut notamment être agencé dans un conduit en périphérie d'un conduit central logeant le bus de distribution hydraulique 3, l'ensemble étant par exemple formé par un tube extrudé.

En se référant aux figures 3 à 5, on va maintenant décrire plus en détail les capteurs 4 et les dispositifs de projection 5 du système de détection optique 100 et leur coopération avec le réseau de commande et d'alimentation 11 commun à au moins deux de ces dispositifs de projection, tel qu'ils ont été représentés schématiquement sur cette figure 3. Dans ce qui va suivre, il est prévu que les dispositifs de projection présentent tous la même forme pour faciliter la standardisation du système de détection optique, mais on pourra bien évidemment ajuster au besoin la forme et la dimension d'un dispositif de projection sans sortir du contexte de l'invention, dès lors que conformément à ce qui a été décrit précédemment, chaque dispositif de projection est raccordé au réseau de commande et d'alimentation par l'intermédiaire du capteur dont le dispositif de projection doit nettoyer la surface vitrée.

Dans le premier mode de réalisation illustré sur la figure 3, le dispositif de projection et le capteur d'un même ensemble comportent chacun un module électronique de commande, parmi lesquels on peut identifier un premier module électronique 120 ménagé dans le dispositif de projection 5 et un deuxième module électronique de commande 122 ménagé dans le capteur 4.

Plus particulièrement, le deuxième module électronique 122 est configuré pour piloter le fonctionnement du capteur 4 et par exemple le moment de déclenchement et la durée de la détection, et pour paramétrer l'échange de données avec une unité électronique principale 200 embarquée sur le véhicule. Et le premier module électronique 120 est configuré pour piloter le fonctionnement du dispositif de projection 5 et par exemple le moment de déclenchement et la durée de la projection de produit nettoyant sur la surface vitrée 21 associée, et le cas échéant la zone spécifique de cette surface vitrée à nettoyer.

Le dispositif de projection 5 comprend un gicleur 8 et un dispositif d'actionnement 7. Dans ce qui va suivre, le dispositif d'actionnement sera représenté par une électrovanne 7, sans que cela soit toutefois limitatif de l'invention, tout actionneur permettant la mise en oeuvre du fonctionnement du gicleur pouvant être utilisé par ailleurs. Lorsque l'électrovanne 7 est alimentée et actionnée, c'est-à-dire lorsqu'elle a reçu une instruction de commande en ce sens par l'intermédiaire du premier module électronique de commande 120, elle autorise le passage du produit nettoyant circulant dans le bus de distribution hydraulique 3 vers le gicleur 8. Le produit nettoyant est alors projeté par le gicleur 8 sur une surface vitrée 21 du capteur 4 associé au dispositif de projection 5. La position du gicleur 8 avant projection du produit nettoyant peut être ajustée par l'intermédiaire de consignes de déplacement générées par le premier module électronique de commande 120.

Le dispositif de projection 5 comprend un organe de raccordement hydraulique 9 pour son raccordement au bus de distribution hydraulique 3. L'organe de raccordement hydraulique 9 présente une forme susceptible d'une part de percer le bus de distribution hydraulique 3 et susceptible d'autre part d'assurer le passage du produit nettoyant depuis ce bus de distribution hydraulique vers le gicleur 8. A cet effet, l'organe de raccordement peut présenter la forme tubulaire et effilée d'une seringue. A l'assemblage de l'organe de raccordement hydraulique 9 sur le bus de distribution hydraulique 3, une résine peut être utilisée pour entourer une zone de contact entre l'organe de raccordement hydraulique 9 et le bus de distribution hydraulique 3, ceci pour assurer une étanchéité de cette zone de contact.

Le dispositif de projection 5 comprend également un organe de maintien mécanique 10 permettant la fixation sur le bus de distribution hydraulique 3. Dans l'exemple illustré, l'organe de maintien mécanique 10 prend la forme d'une pince venant entourer au moins partiellement le conduit principal hydraulique participant à former le bus de distribution hydraulique 3. On pourra par exemple prévoir un organe de maintien à déformation élastique, définissant dans sa position d'origine une gorge de dimensions sensiblement inférieures à celle du conduit définissant le bus de distribution, l'opérateur ayant alors à forcer l'organe de raccordement à se déformer pour pouvoir venir en prise sur le bus de distribution hydraulique, et le rappel élastique de l'organe de raccordement assurant le maintien en position sur le bus.

Selon l'invention, et quelle que soit la façon dont les dispositifs de projection sont raccordés hydrauliquement, sur un bus de distribution hydraulique commun ou non, et tel que cela est visible pour l'ensemble formé d'un capteur et d'un dispositif de projection représenté à titre d'exemple sur la figure 3 selon un premier mode de réalisation ou sur la figure 4 selon un deuxième mode de réalisation, chaque dispositif de projection 5 est relié au réseau de commande et d'alimentation 11 par l'intermédiaire du capteur associé 4, et indépendamment du raccordement électrique, sur ce même réseau de commande et d'alimentation, du dispositif de projection voisin. Les ensembles formés par un dispositif de projection et un capteur sont raccordés électriquement dans des zones de raccordement distinctes les unes des autres et agencées à distance le long du réseau de commande et d'alimentation.

Le réseau de commande et d'alimentation 11 est relié électriquement à une unité électronique principale 200 embarquée sur le véhicule et configurée notamment à définir des informations et instructions de commande et à les coder pour les transmettre aux dispositifs de projection ciblés par ces instructions. Tout type de réseau de communication peut ici être mis en œuvre, et par exemple un réseau fonctionnant avec un protocole de communication de type courant porteur en ligne (CPL), ou bien avec un protocole de communication de type LIN ou CAN.

L'ensemble formé par le dispositif de projection 5 et le capteur 4 associé peut être logé dans un boîtier 12, tel qu'illustré schématiquement sur les figures 3 à 5. Il convient de noter que les organes de raccordement hydraulique ou de maintien mécanique peuvent être portés par le boîtier en lieu et place de l'électrovanne tel que cela a pu être décrit précédemment.

Le capteur 4 peut être une caméra vidéo ou encore un scanner laser nécessaire pour permettre le fonctionnement d'un dispositif d'aide à la conduite et/ou à la manœuvre du véhicule 1. Lorsqu'un dispositif de projection 5 est associé à un tel capteur optique 4, ce dernier peut communiquer avec l'unité électronique principale 200 équipant ce véhicule 1, via un câble de connexion électrique non représenté ici, distinct du réseau de commande et d'alimentation 11. A titre d'exemple, lorsque le capteur optique 4 est une caméra, ce câble de connexion électrique permet de transmettre un signal vidéo à l'unité électronique principale 200.

Tel que cela a été précisé précédemment, le dispositif de projection est relié électriquement au réseau de commande et d'alimentation par l'intermédiaire du capteur associé. Plus particulièrement, on a illustré sur la figure 3, la mise en oeuvre d'une telle connexion spécifique selon un premier mode de réalisation.

Dans ce premier mode de réalisation, le capteur 4 comprend une borne de connexion électrique 40 et l'électrovanne 7 comprend un plot de connexion électrique 70, le plot de connexion électrique 70 de l'électrovanne 7 étant relié électriquement au réseau de commande et d'alimentation via la borne de connexion électrique 40 du capteur 4.

La borne de connexion électrique 40 du capteur 4 comprend deux broches 401, 402 reliées électriquement l'une à l'autre, avec une première broche 401 qui est reliée électriquement au réseau de commande et d'alimentation 11 et la deuxième broche 402 qui est reliée au plot de connexion électrique 70 du dispositif d'actionnement 7 par l'intermédiaire d'un câble de raccordement de commande et d'alimentation 403.

Tel que cela a été précisé, l'électrovanne 7 comporte un module électronique de pilotage qui lui est propre et qui est configuré pour assurer sa commande.

On comprendra alors que la borne de connexion électrique 40 du capteur 4 est utilisée, d'une part, pour échanger des données entre le capteur 4 et l'unité électronique principale 200 via le réseau d'alimentation et de commande 11 et, d'autre part, pour router ce réseau 11 vers l'électrovanne 7 du dispositif de projection 5, par l'intermédiaire du câble de raccordement qui est configuré pour passer aussi bien l'alimentation que les données et commandes conformément au réseau de commande et d'alimentation 11.

Les modules électroniques de pilotage respectifs du capteur et de l'électrovanne 7 sont programmés pour analyser en continu les données transmises par le réseau de commande et d'alimentation 11. Lorsque l'un des modules électroniques de pilotage identifie une instruction émise par l'unité électronique principale 200, transmise via le réseau de commande et d'alimentation 11 et qui lui est dédiée, par exemple une instruction de commande en ouverture de l'électrovanne 7, il actionne le capteur ou l'électrovanne qui lui est associé.

Le deuxième mode de réalisation illustré sur la figure 4 diffère de ce qui précède en ce que l'ensemble formé par un capteur 4 et un dispositif de projection 5 ne comporte qu'un seul module électronique de commande, et plus particulièrement en ce que seul le capteur comporte un module électronique de commande 122.

Comme précédemment, le module électronique 122 ménagé dans le capteur est configuré pour piloter le fonctionnement de ce capteur 4 et par exemple le moment de déclenchement et la durée de la détection, et pour paramétrer l'échange de données avec une unité électronique principale 200 embarquée sur le véhicule, et il est ici paramétré de manière complémentaire pour déterminer des conditions de fonctionnement du dispositif de projection en fonction des instructions de commande en provenance du réseau de commande et d'alimentation : à titre d'exemple, le module électronique embarqué sur le capteur 4 est configuré pour déterminer quand autoriser ou couper l'alimentation électrique du dispositif de projection pour piloter le moment de déclenchement et la durée de la projection de produit nettoyant sur la surface vitrée 21 associée.

Dans ce cas, le capteur 4 comprend une première borne de connexion électrique 43 et une deuxième borne de connexion électrique 44 distinctes l'une de l'autre, tandis que conformément à ce qui précède, le dispositif d'actionnement 7 comprend un plot de connexion électrique 70.

La première borne de connexion électrique du capteur est reliée au réseau de commande et d'alimentation 11 et la deuxième borne de connexion électrique du capteur est reliée au plot de connexion électrique du dispositif d'actionnement.

Dans ce deuxième mode de réalisation, seule la première borne de connexion électrique 43 comportent une broche 404 dédiée à la transmission de données. Cette broche 404 de la première borne de connexion électrique 43 est reliée électriquement d'une part au réseau de commande et d'alimentation 11 et d'autre part au module électronique de pilotage 122.

Parallèlement, chaque borne de connexion électrique 43, 44 comporte deux broches dédiées à l'alimentation parmi lesquelles une broche dédiée à une borne d'alimentation positive et une broche dédiée à la masse, ces bornes étant reliées électriquement deux à deux, c'est-à-dire les broches dédiées à l'alimentation positive ensemble et les broches dédiées à la masse ensemble. Les deux broches de la première borne de connexion électrique 43 sont destinées à être reliées électriquement au réseau de commande et d'alimentation 11 et les deux broches de la deuxième borne 44 de connexion électrique sont destinées à être reliées électriquement à des deuxième et troisième broches du plot de connexion électrique 70 du dispositif d'actionnement 7, par l'intermédiaire d'un câble de raccordement d'alimentation 405, seule l'alimentation électrique circulant entre le capteur et le dispositif de projection dans ce deuxième mode de réalisation.

A la figure 5, on a représenté deux dispositifs de projection comportant ces organes de raccordement hydraulique et ces organes de maintien mécanique coopérant avec le bus de distribution hydraulique 3 en deux zones de raccordement 90, 92 distinctes, et on a illustré simultanément le raccordement électrique de ces deux dispositifs de projection, par l'intermédiaire du capteur associé, au réseau de commande et d'alimentation 11, ici configuré en réseau alimenté depuis l'unité électronique principale 200.

On comprend que cette disposition de dispositifs de projection agencés successivement le long d'un bus de distribution hydraulique et le long d'un bus de commande et d'alimentation participe, en complément de l'agencement spécifique selon l'invention selon lequel chaque dispositif de projection est relié électriquement au bus ou réseau de commande et d'alimentation par l'intermédiaire d'un capteur associé, lui-même devant être relié à ce bus ou réseau de commande et d'alimentation, permet de diminuer fortement la quantité de câbles électriques à prévoir pour équiper le véhicule d'un dispositif de détection à plusieurs capteurs agencés tout autour du véhicule.

On aura compris à la lecture de ce qui précède que le système de détection optique selon l'invention est avantageux en ce qu'il comporte un réseau électrique configuré pour relier à moindre frais les différents éléments composant ce système de détection optique, et notamment un capteur et son dispositif de nettoyage associé. Ce dispositif de nettoyage est avantageusement relié électriquement au capteur qui sert d'intermédiaire entre ce dispositif de nettoyage et le réseau de commande et d'alimentation. Dans tous les cas d'application, le système de détection optique selon l'invention permet de diminuer la longueur de câbles de connexion électrique du fait de la position rapprochée du capteur et du dispositif de projection associé, et dans certains cas, ce système peut permettre de centraliser l'électronique de commande sur le capteur, seule une alimentation électrique étant alors envoyée ou non au dispositif de projection en fonction de l'instruction de commande du dispositif de projection captée par l'électronique de commande du capteur optique.

Bien entendu, les caractéristiques, les variantes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

## Revendications

1. Système de détection optique (100) pour véhicule (1) comprenant au moins un capteur (4) et un dispositif de projection (5) d'un produit nettoyant sur la surface vitrée (21) de ce capteur, le capteur (4) étant relié électriquement à un réseau de commande et d'alimentation (11), **caractérisé en ce que** le capteur (4) et le dispositif de projection (5) sont reliés électriquement l'un à l'autre en vue d'assurer une commande du dispositif de projection (5), le réseau (11) étant dirigé vers le capteur (4) et les informations ou l'alimentation récupérées par le capteur (4) sont transmises vers le dispositif de projection (5) par un câblage réduit à la seule distance entre le dispositif de projection de produit nettoyant (5) et le capteur (4).

2. Système de détection optique (100) selon la revendication précédente, **caractérisé en ce que** le dispositif de projection (5) comprend un gicleur (8) et un dispositif d'actionnement (7) de ce gicleur (8).

3. Système de détection optique (100) selon la revendication précédente, **caractérisé en ce que** le dispositif d'actionnement (7) et le capteur (4) comportent des éléments de connexion électrique (40, 70) qui coopèrent pour transmettre une alimentation et/ou une instruction de commande depuis le réseau de commande et d'alimentation vers le dispositif d'actionnement (7), par l'intermédiaire du capteur (4).

4. Système de détection optique (100) selon la revendication précédente, **caractérisé en ce que** le dispositif d'actionnement (7) comporte un module électronique de pilotage (120) configurée pour assurer sa commande.

5. Système de détection optique (100) selon la revendication précédente, **caractérisé en ce que** le capteur (4) comprend une borne de connexion électrique (40) et le dispositif d'actionnement (7) comprend un plot de connexion électrique (70), le plot de connexion électrique (70) du dispositif d'actionnement (7) étant relié électriquement au réseau de commande et d'alimentation (11) via la borne de connexion électrique (40) du capteur (4).

6. Système de détection optique (100) selon la revendication 4 ou 5, **caractérisé en ce que** la borne de connexion électrique (40) du capteur (4) comprend deux broches (401, 402) reliées électriquement l'une à l'autre, une première broche (401) étant destinée à être reliée électriquement au réseau de commande et d'alimentation (11) et la deuxième broche (402) étant destinée à être reliée au plot de connexion électrique (70) du dispositif d'actionnement (7) par l'intermédiaire d'un câble de raccordement de commande et d'alimentation (403).

7. Système de détection optique (100) selon la revendication 4, **caractérisé en ce que** le capteur (4) comporte un module électronique de pilotage (122) configuré pour piloter le fonctionnement du dispositif d'actionnement (7).

8. Système de détection optique (100) selon la revendication précédente, **caractérisé en ce que** le capteur (4) comprend une première borne de connexion électrique (43) et une deuxième borne de connexion électrique (44) distinctes l'une de l'autre, et **en ce que** le dispositif d'actionnement (7) comprend un plot de connexion électrique (70), la première borne de connexion électrique (43) du capteur (4) étant reliée au réseau de commande et d'alimentation (11) et la deuxième borne de connexion électrique (44) du capteur (4) étant reliée au plot de connexion électrique (70) du dispositif d'actionnement (7).

9. Système de détection optique (100) selon la revendication précédente, **caractérisé en ce qu'**une seule borne de connexion électrique (43) comporte une broche (404) dédiée à la transmission de données, cette broche étant reliée d'une part au module électronique de pilotage (122) du capteur (4) et d'autre part au réseau de commande et d'alimentation (11).

10. Système de détection optique (100) selon la revendication précédente, **caractérisé en ce que** chaque borne de connexion électrique (43, 44) comporte deux broches dédiées à l'alimentation parmi lesquelles une broche dédiée à une borne d'alimentation positive et une broche dédiée à la masse, ces bornes étant reliées électriquement deux à deux, les deux broches de la première borne de connexion électrique (43) étant destinées à être reliées électriquement au réseau de commande et d'alimentation (11) et les deux broches de la deuxième borne (44) de connexion électrique étant destinées à être reliées électriquement à des deuxième et troisième broches du plot de connexion électrique (70) du dispositif d'actionnement (7) par l'intermédiaire d'un câble de raccordement d'alimentation (405).

11. Système de détection optique (100) selon l'une quelconque des revendications précédentes, **caractérisé en ce qu'**un boîtier (12) loge le capteur (4) et le dispositif de projection (5).

12. Système de détection optique (100) selon l'une quelconque des revendications précédentes, **caractérisé en ce qu'**il comprend une pluralité de capteurs (4) et de dispositifs de projection (5) d'un produit nettoyant associés, les capteurs (4) étant reliés électriquement à un bus de données, formant le réseau de commande et d'alimentation (11), indépendamment l'un de l'autre.

13. Système de détection optique (100) selon la revendication précédente, **caractérisé en ce qu'**il comprend un bus de distribution hydraulique (3) apte à permettre la circulation du produit nettoyant, les dispositifs de projection (5) étant reliés au bus de distribution hydraulique (3) indépendamment les uns des autres.

14. Système de détection optique (100) selon la revendication précédente, **caractérisé en ce que** le réseau de commande et d'alimentation (11) et le bus de distribution hydraulique (3) forment un même bus de distribution (17) électrique et hydraulique des dispositifs de projection (5).

## Patentansprüche

1. Optisches Erfassungssystem (100) für ein Fahrzeug (1), das mindestens einen Sensor (4) und eine Ausstoßvorrichtung (5) eines Reinigungsprodukts auf die verglaste Fläche (21) dieses Sensors enthält, wobei der Sensor (4) mit einem Steuer- und Versorgungsnetz (11) elektrisch verbunden ist, **dadurch gekennzeichnet, dass** der Sensor (4) und die Ausstoßvorrichtung (5) elektrisch miteinander verbunden sind, um eine Steuerung der Ausstoßvorrichtung (5) zu gewährleisten, wobei das Netz (11) zum Sensor (4) geleitet wird und die vom Sensor (4) abgerufenen Informationen oder die Versorgung über eine Verkabelung zur Ausstoßvorrichtung (5) übertragen werden, die nur auf den Abstand zwischen der Ausstoßvorrichtung von Reinigungsprodukt (5) und dem Sensor (4) reduziert ist.

2. Optisches Erfassungssystem (100) nach dem vorhergehenden Anspruch, **dadurch gekennzeichnet, dass** die Ausstoßvorrichtung (5) eine Spritzdüse (8) und eine Betätigungsvorrichtung (7) dieser Spritzdüse (8) enthält.

3. Optisches Erfassungssystem (100) nach dem vorhergehenden Anspruch, **dadurch gekennzeichnet, dass** die Betätigungsvorrichtung (7) und der Sensor (4) elektrische Anschlusselemente (40, 70) aufweisen, die zusammenwirken, um eine Versorgung und/oder einen Steuerbefehl vom Steuer- und Versorgungsnetz zur Betätigungsvorrichtung (7) über den Sensor (4) zu übertragen.

4. Optisches Erfassungssystem (100) nach dem vorhergehenden Anspruch, **dadurch gekennzeichnet, dass** die Betätigungsvorrichtung (7) ein elektronisches Steuermodul (120) aufweist, das konfiguriert ist, ihre Steuerung zu gewährleisten.

5. Optisches Erfassungssystem (100) nach dem vorhergehenden Anspruch, **dadurch gekennzeichnet, dass** der Sensor (4) eine elektrische Anschlussklemme (40) enthält, und die Betätigungsvorrichtung (7) einen elektrischen Anschlusskontakt (70) enthält, wobei der elektrische Anschlusskontakt (70) der Betätigungsvorrichtung (7) über die elektrische Anschlussklemme (40) des Sensors (4) mit dem Steuer- und Versorgungsnetz (11) elektrisch verbunden ist.

6. Optisches Erfassungssystem (100) nach Anspruch 4 oder 5, **dadurch gekennzeichnet, dass** die elektrische Anschlussklemme (40) des Sensors (4) zwei elektrisch miteinander verbundene Stifte (401, 402) enthält, wobei ein erster Stift (401) dazu bestimmt ist, elektrisch mit dem Steuer- und Versorgungsnetz (11) verbunden zu werden, und der zweite Stift (402) dazu bestimmt ist, über ein Steuer- und Versorgungs-Anschlusskabel (403) mit dem elektrischen Anschlusskontakt (70) der Betätigungsvorrichtung (7) verbunden zu werden.

7. Optisches Erfassungssystem (100) nach Anspruch 4, **dadurch gekennzeichnet, dass** der Sensor (4) ein elektronisches Steuermodul (122) aufweist, das konfiguriert ist, den Betrieb der Betätigungsvorrichtung (7) zu steuern.

8. Optisches Erfassungssystem (100) nach dem vorhergehenden Anspruch, **dadurch gekennzeichnet, dass** der Sensor (4) eine erste elektrische Anschlussklemme (43) und eine zweite elektrische Anschlussklemme (44) enthält, die sich voneinander unterscheiden, und dass die Betätigungsvorrichtung (7) einen elektrischen Anschlusskontakt (70) enthält, wobei die erste elektrische Anschlussklemme (43) des Sensors (4) mit dem Steuer- und Versorgungsnetz (11) verbunden ist, und die zweite elektrische Anschlussklemme (44) des Sensors (4) mit dem elektrischen Anschlusskontakt (70) der Betätigungsvorrichtung (7) verbunden ist.

9. Optisches Erfassungssystem (100) nach dem vorhergehenden Anspruch, **dadurch gekennzeichnet, dass** eine einzige elektrische Anschlussklemme (43) einen für die Datenübertragung vorgesehenen Stift (404) aufweist, wobei dieser Stift einerseits mit dem elektronischen Steuermodul (122) des Sensors (4) und andererseits mit dem Steuer- und Versorgungsnetz (11) verbunden ist.

10. Optisches Erfassungssystem (100) nach dem vorhergehenden Anspruch, **dadurch gekennzeichnet, dass** jede elektrische Anschlussklemme (43, 44) zwei für die Versorgung vorgesehene Stifte aufweist, darunter ein für eine positive Versorgungsklemme vorgesehener Stift und ein für die Masse vorgesehener Stift, wobei diese Klemmen elektrisch paarweise verbunden sind, wobei die zwei Stifte der ersten elektrischen Anschlussklemme (43) dazu bestimmt sind, elektrisch mit dem Steuer- und Versorgungsnetz (11) verbunden zu werden, und die zwei Stifte der zweiten elektrischen Anschlussklemme (44) dazu bestimmt sind, über ein Versorgungsanschlusskabel (405) elektrisch mit zweiten und dritten Stiften des elektrischen Anschlusskontakts (70) der Betätigungsvorrichtung (7) verbunden zu werden.

11. Optisches Erfassungssystem (100) nach einem der vorhergehenden Ansprüche, **dadurch gekennzeichnet, dass** ein Gehäuse (12) den Sensor (4) und die Ausstoßvorrichtung (5) aufnimmt.

12. Optisches Erfassungssystem (100) nach einem der vorhergehenden Ansprüche, **dadurch gekennzeichnet, dass** es eine Vielzahl von einander zugeordneten Sensoren (4) und Ausstoßvorrichtungen (5) eines Reinigungsprodukts enthält, wobei die Sensoren (4) unabhängig voneinander mit einer das Steuer- und Versorgungsnetz (11) bildenden Datensammelleitung elektrisch verbunden sind.

13. Optisches Erfassungssystem (100) nach dem vorhergehenden Anspruch, **dadurch gekennzeichnet, dass** es eine hydraulische Verteilersammelleitung (3) enthält, die fähig ist, die Zirkulation des Reinigungsprodukts zu erlauben, wobei die Ausstoßvorrichtungen (5) unabhängig voneinander mit der hydraulischen Verteilersammelleitung (3) verbunden sind.

14. Optisches Erfassungssystem (100) nach dem vorhergehenden Anspruch, **dadurch gekennzeichnet, dass** das Steuer- und Versorgungsnetz (11) und die hydraulische Verteilersammelleitung (3) eine gleiche elektrische und hydraulische Verteilersammelleitung (17) der Ausstoßvorrichtungen (5) bilden.

## Claims

1. An optical detection system (100) for a vehicle (1) comprising at least one sensor (4) and a spraying device (5) for spraying a cleaning product onto the glazed surface (21) of this sensor, the sensor (4) being electrically connected to a power-supply and control network (11), **characterized in that** the sensor (4) and the spraying device (5) are electrically connected to each other in the aim of controlling the spraying device (5), the network (11) being directed to the sensor (4) and the information or power supply recovered by the sensor (4) are transmitted to the spraying device (5) by a cable reduced to only the distance between the device for spraying cleaning product (5) and the sensor (4).

2. The optical detection system (100) as claimed in the preceding claim, **characterized in that** the spraying device (5) comprises an atomizer (8) and an actuation device (7) for actuating this atomizer (8) .

3. The optical detection system (100) as claimed in the preceding claim, **characterized in that** the actuation device (7) and the sensor (4) include electrical connection elements (40, 70) that cooperate to transmit a power supply and/or a control instruction from the power-supply and control network to the actuation device (7), by means of the sensor (4).

4. The optical detection system (100) as claimed in the preceding claim, **characterized in that** the actuation device (7) includes a control electronic module (120) for ensuring control of same.

5. The optical detection system (100) as claimed in the preceding claim, **characterized in that** the sensor (4) comprises an electrical connection terminal (40) and the actuation device (7) comprises an electrical connection plug (70), the electrical connection plug (70) of the actuation device (7) being electrically connected to the power-supply and control network (11) via the electrical connection terminal (40) of the sensor (4) .

6. The optical detection system (100) as claimed in claim 4 or 5, **characterized in that** the electrical connection terminal (40) of the sensor (4) comprises two pins (401, 402) electrically connected to each other, a first pin (401) being intended to be electrically connected to the power-supply and control network (11) and the second pin (402) being intended to be connected to the electrical connection plug (70) of the actuation device (7), by means of a control and power-supply connection cable (403).

7. The optical detection system (100) as claimed in claim 4, **characterized in that** the sensor (4) includes a control electronic module (122) configured to control the operation of the actuation device (7).

8. The optical detection system (100) as claimed in the preceding claim, **characterized in that** the sensor (4) comprises a first electrical connection terminal (43) and a second electrical connection terminal (44) separate from each other, and **in that** the actuation device (7) comprises an electrical connection plug (70), the first electrical connection terminal (43) of the sensor (4) being connected to the power-supply and control network (11) and the second electrical connection terminal (44) of the sensor (4) being connected to the electrical connection plug (70) of the actuation device (7).

9. The optical detection system (100) as claimed in the preceding claim, **characterized in that** only a single electrical connection terminal (43) includes a pin (404) dedicated to the transmission of data, this pin being connected on one hand to the control electronic module (122) of the sensor (4) and on the other to the power-supply and control network (11) .

10. The optical detection system (100) as claimed in the preceding claim, **characterized in that** each electrical connection terminal (43, 44) includes two pins dedicated to supplying power, of which one pin dedicated to a positive power supply terminal and one pin dedicated to earth, these pins being electrically connected two by two, the two pins of the first electrical connection terminal (43) being intended to be electrically connected to the power-supply and control network (11) and the two pins of the second electrical connection (44) being intended to be electrically connected to second and third pins of the electrical connection plug (70) of the actuation device (7) by means of a power supply connection cable (405).

11. The optical detection system (100) as claimed in any one of the preceding claims, **characterized in that** a casing (12) accommodates the sensor (4) and the spraying device (5).

12. The optical detection system (100) as claimed in any one of the preceding claims, **characterized in that** it comprises a plurality of sensors (4) and associated devices (5) for spraying a cleaning product, the sensors (4) being electrically connected to a databus, forming the power-supply and control network (11), independently of each other.

13. The optical detection system (100) as claimed in the preceding claim, **characterized in that** it comprises a hydraulic distribution bus (3) able to allow the cleaning product to circulate, the spraying devices (5) being connected to the hydraulic distribution bus (3) independently of each other.

14. The optical detection system (100) as claimed in the preceding claim, **characterized in that** the power-supply and control network (11) and the hydraulic distribution bus (3) form a single electrical and hydraulic bus (17) for distributing the spraying devices (5).
